# EUROPEAN PATENT APPLICATION

(11) **EP 2 676 992 A1**
(43) Date of publication of application: **25.12.2013**
(21) Application number: 12765130.5
(22) Date of filing: 26.03.2012
(51) Int. Cl.: C08J 5/18, B32B 27/00, B65D 85/86, C08L 101/00

(54) **FILM AND PACKAGING BODY**

(30) Priority: 30.03.2011 JP 2011074178
(71) Applicant: Sumitomo Bakelite Co., Ltd., Shinagawa-ku Tokyo 140-0002 (JP)
(72) Inventor: MASUI Ken, Tokyo 140-0002 (JP)
(74) Representative: Ahner, Philippe
(86) International application number: PCT/JP2012/057715
(87) International publication number: WO 2012/133284

(57) **Abstract**

An object of the present invention is to provide a film that is resistant to the effects of the surface condition of an adherend such as a carrier tape and demonstrates only small fluctuations in peel strength. The film according to the present invention is provided with a surface layer. The surface layer is formed by using a polymer blend as the main component thereof. The polymer blend comprises at least two types of single segment polymers, at least two types of multi-segment polymers, or at least one type of single segment polymer and at least one type of multi-segment polymer. In the film according to the present invention, the maximum value of the absolute value of the difference in solubility parameter values among all segments in the polymer blend is 0.40 to 1.40.

## Description

### TECHNICAL FIELD

The present invention relates to a film that can be used for, for example, food packaging or electronic component packaging. In addition, the present invention relates to a packaging body provided with that film.
The present application claims priority on the basis of Japanese Patent Application No. 2011-074178, filed in Japan on March 30, 2011, the contents of which are incorporated herein by reference.

### BACKGROUND ART

A cover tape that undergoes interfacial peeling when peeled from a carrier tape has been previously proposed (see, for example, Patent Document 1).

### Prior Art Documents

### Patent Documents

Patent Document 1: Japanese Unexamined Patent Application, First Publication No. 2010-173673

### DISCLOSURE OF THE INVENTION

### Problems to be Solved by the Invention

However, in the case of the cover tape as described above, there are considerable fluctuations in peel strength as a result of being easily affected by the surface condition of the carrier tape. Thus, when this interfacial peeling-type cover tape is peeled from the carrier tape, the carrier tape frequently vibrates. When the carrier tape vibrates in this manner, there is the problem of an electronic component jumping out of the carrier tape.

An object of the present invention is to provide a film that is resistant to the effects of the surface condition of an adherend such as a carrier tape and demonstrates only small fluctuations in peel strength.

### Means for Solving the Problems

(1) The film according to the present invention is provided with a surface layer (adhesive layer). Furthermore, the film may be formed only from a surface layer (namely, a single-layer film), or may be formed from the surface layer and another layer (namely, a multi-layer film). The surface layer is formed having a polymer blend as a main component thereof. The polymer blend comprises at least two types of single segment polymers, at least two types of multi-segment polymers, or at least one type of single segment polymer and at least one type of multi-segment polymer. Furthermore, in the present application, a "single segment polymer" refers to a polymer that has only one segment, and is a homopolymer, randomly copolymerized polymer or alternately copolymerized polymer. In addition, in the present application, a "multi-segment polymer" refers to a polymer having two or more segments, and is either a block copolymerized polymer or graft copolymerized polymer. In addition, in the present application, a segment refers to a portion having 10 or more repeating constituent units. In the film according to the present invention, the maximum value of the absolute value of the difference in solubility parameter values among all segments in the polymer blend is 0.40 to 1.40. Furthermore, in the present application, solubility parameter refers to the Hildebrand solubility parameter. In addition, the maximum value of the absolute value of the difference in solubility parameter values is preferably 0.90 to 1.30 and more preferably 1.00 to 1.20.

When a film satisfying the aforementioned condition is adhered to an adhered by thermal adhesion or an adhesive through the surface layer, the film can be peeled off while causing cohesive failure of the surface layer when peeling the film from the adherend. In general, peeling with cohesive failure is less susceptible to the effects of the surface condition of the adherend and there is less fluctuation in peel strength in comparison with interfacial peeling. Consequently, this film is resistant to the effects of the surface condition of the adherend, and in cases it is peeled from an adherend after being adhered thereto, fluctuations in peel strength can be reduced.

(2) In the film according to (1) above, two segments having solubility parameter values serving as the basis for calculating the maximum value (to be referred to as "specific segments") are preferably contained at 15 parts by weight to 60 parts by weight based on 100 parts by weight of the polymer blend. In addition, the weight ratio of one specific segment to the other specific segment is preferably within the range of 30:70 to 70:30.

When a film that satisfies the aforementioned conditions is adhered to an adherend by thermal adhesion or adhesive through the surface layer, the film can be peeled off while causing cohesive failure of the surface layer when the film is peeled from the adherend. In general, peeling with cohesive failure is less susceptible to the effects of the surface condition of the adherend and there is less fluctuation in peel strength in comparison with interfacial peeling. Consequently, this film is resistant to the effects of the surface condition of the adherend, and in cases it is peeled from the adherend after being adhered thereto, fluctuations in peel strength can be reduced.

(3) In the film according to (1) or (2) above, at least one type of segment has thermal adhesiveness. In addition, the surface layer functions as a thermal adhesive layer.

Consequently, this film can be adhered to an adherend by thermal adhesion.

(4) The packaging body according to the present invention is provided with the film according to (3) above and a packaging container. The opening of the packaging container is covered with the aforementioned film. The absolute value of the difference between the solubility parameter value of the segment having thermal adhesiveness and the solubility parameter value of the main component of the resin composition that forms the surface around the opening of the packaging container is 1.90 or less. Furthermore, the main component referred to here refers to that which accounts for 50% by weight or more of the resin composition.

In a packaging body that satisfies the aforementioned condition, the film is favorably adhered to the packaging container prior to opening, and fluctuations in peel strength of the film during opening can be reduced.

(5) In the packaging body according to (4) above, the peel strength of the film with respect to the packaging container is preferably 0.1 N to 1.0 N. Furthermore, the aforementioned peel strength is measured in compliance with standards when using a carrier tape having a width of 8 mm as described in JIS C-0806-3.

In a packaging body that satisfies the aforementioned condition, the film is favorably adhered to the packaging container prior to opening, and the film can be easily peeled off during opening.

### Effects of the Invention

The film according to the present invention is resistant to the effects of the surface condition of an adherend, and in cases it is peeled from an adhered after being adhered thereto, fluctuations in peel strength can be reduced.

In addition, as was previously described, this film is peeled off while causing cohesive failure of the surface layer when peeled from an adherend after having been adhered by thermal adhesion or an adhesive through the surface layer. Consequently, this film not only undergoes fewer changes in peel strength over time than conventional interfacial adhesion-type film, but also demonstrates less susceptibility to the effects of the materials of the adherend on peel strength, and is also less likely to peel off spontaneously in cases of being transported while adhered to the adherend.

### BRIEF DESCRIPTION OF THE DRAWINGS

FIG. 1 is a perspective view of a packaging body according to an embodiment of the present invention.
FIG. 2 is a cross-sectional view taken along line A-A of the packaging body shown in FIG. 1.
FIG. 3 is an enlarged cross-sectional view of portion P of FIG. 2.
FIG. 4 is a perspective view showing the state of a cover tape being peeled from a carrier tape.
FIG. 5 is an overhead view showing the state after a cover tape has been peeled from a carrier tape.

### BEST MODE FOR CARRYING OUT THE INVENTION

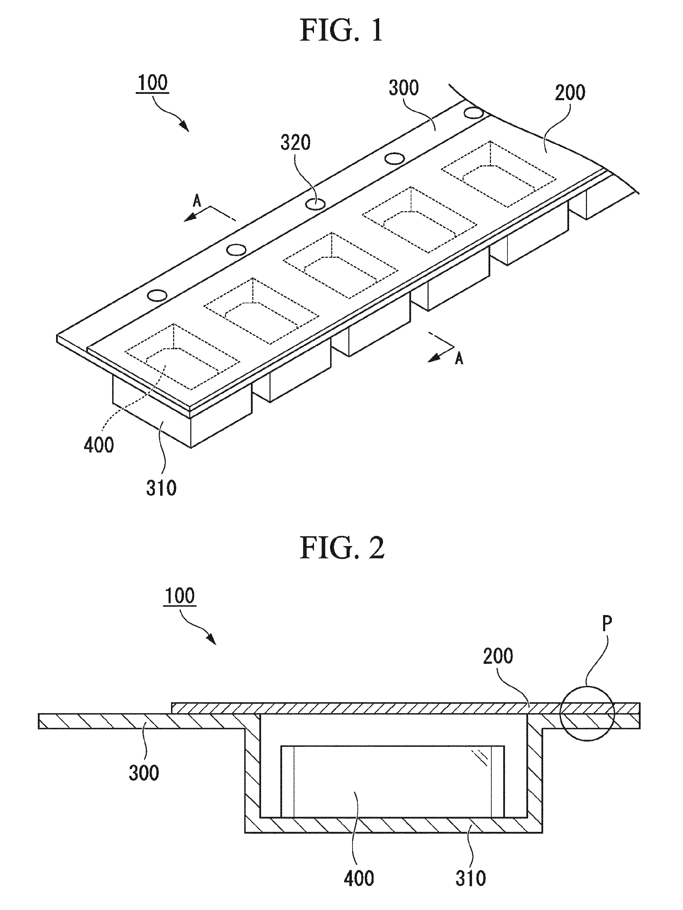

As shown in FIGS. 1 and 2, a packaging body 100 according to an embodiment of the present invention mainly comprises a cover tape 200 and a carrier tape (packaging container) 300. The following provides detailed descriptions of the cover tape 200 and the carrier tape 300, respectively.

### <Cover Tape>

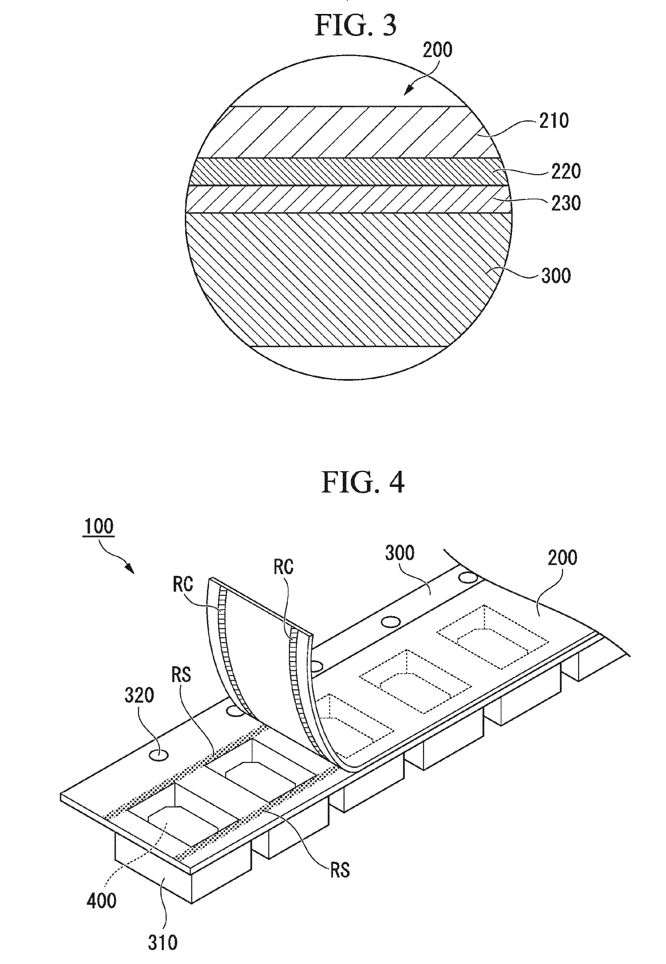

As shown in FIG. 3, the cover tape 200 is a laminated film comprising a base material layer 210, an intermediate layer 220 and an adhesive layer (surface layer) 230.

The base material layer 210 is preferably a transparent, highly rigid, biaxially oriented film of a polyester resin such as polyethylene terephthalate (PET) or polyethylene naphthalate (PEN), a polyolefin resin such as polyethylene or polypropylene, or a polyamide resin such as Nylon®. The thickness of the base material layer 210 is preferably 6 µm to 100 µm. In addition, the base material layer 210 may be subjected to antistatic treatment on one side thereof. In addition, the base material layer 210 may also be subjected to surface treatment such as corona treatment, plasma treatment or sandblasting treatment as necessary on the side on which the intermediate layer 220 or the adhesive layer 230 is formed. In addition, the base material layer 210 may be laminated with the previously mentioned oriented film for the purpose of enhancing mechanical strength of the cover tape 200.

The intermediate layer 220 is formed from, for example, polyethylene, polyethylene-vinyl acetate copolymer, ethylene-acrylic copolymer or polyurethane. Furthermore, low-density polyethylene is preferable for the polyethylene. In addition, the thickness of the intermediate layer 220 is preferably 10 µm to 50 µm. Furthermore, the intermediate layer 220 may be omitted.

Examples of methods used to form the intermediate layer 220 on the base material layer 210, namely a base material film, include dry lamination and extrusion lamination. Furthermore, extrusion lamination is preferable in consideration of the flexibility of the base material layer 210.

The adhesive layer (surface layer) 230 is formed from a polymer blend. This polymer blend may comprise a plurality of single segment polymers, may comprise a plurality of multi-segment polymers, or may comprise at least one type of single segment polymer and at least one type of multi-segment polymer. Furthermore, in the present embodiment, a "single segment polymer" refers to a polymer having only one segment, and is a homopolymer, randomly copolymerized polymer or alternately copolymerized polymer. In addition, a "multi-segment polymer" refers to a polymer having two or more segments and is a block copolymerized polymer or graft copolymerized polymer. In the present embodiment, the maximum value of the absolute value of the difference in solubility parameter values among all segments in the polymer blend is 0.40 to 1.40. Furthermore, an electrically conductive substance may be dispersed in this adhesive layer. In the case the maximum value of the absolute value of the difference in solubility parameter values among all segments in the polymer blend is less than 0.4, interfacial peeling occurs due to an increase in cohesive force, thereby resulting in increased susceptibility to the effects of the surface condition of the adherend and causing large fluctuations in peel strength, while in the case the maximum value exceeds 1.40, adequate peel strength is unable to be obtained due to a decrease in cohesive force, thereby resulting in the occurrence of the problem of poor film formation and making this undesirable.

Furthermore, at least one type of single segment polymer and multi-segment polymer contained in the polymer blend is preferably a thermally adhesive resin, incompatible resin insoluble in a thermally adhesive resin or antistatic resin. In addition, all of a thermal adhesive resin, incompatible resin insoluble in a thermal adhesive resin and antistatic resin are more preferably contained in the polymer blend. Furthermore, the polymer blend has a phase-separated structure in such case.

Examples of thermal adhesive resins include polyolefin-based resins, polystyrene-based resins, polyester-based resins, vinyl acetate-based resins, polyurethane resins and acrylic resins.
Examples of vinyl acetate-based resins and acrylic resins include vinyl chloride-vinyl acetate copolymers, ethylene-acrylic acid copolymers, ethylene-methyl acrylate random copolymers, ethylene-methyl methacrylate random copolymers, ethylene-ethyl acrylate random copolymers, ethylene-ethyl methacrylate random copolymers, ethylene-butyl acrylate random copolymers and ethylene-vinyl acetate copolymers.

Examples of polyolefin-based resins include polyethylene, polypropylene and ethylene-α olefin copolymers.

Examples of polystyrene-based resins include polystyrene, styrene-butadiene-styrene block copolymers (SBS), styrene-ethylene-butylene-styrene block copolymers (SEBS), styrene-isoprene-styrene block copolymers (SIS), styrene-ethylene-propylene-styrene block copolymers (SEPS) and hydrogenated styrene-butadiene random copolymers (HSBR).

Examples of polyester-based resins include polyethylene terephthalate, polybutylene terephthalate and polyethylene naphthalate.

In the case the thermal adhesive resin is an ethylene-methyl acrylate random copolymer or ethylene-methyl methacrylate random copolymer, examples of incompatible resins include methyl methacrylate-styrene random copolymers and polystyrene resin.

Among the aforementioned thermal adhesive resins, acrylic resins, polyolefin-based resins and vinyl acetate-based resins are preferable, and among these, ethylene-acrylic acid copolymers, ethylene-methyl methacrylate random copolymers and ethylene-vinyl acetate copolymers are particularly preferable.

Examples of antistatic resins include nonionic polyethers such as polyethylene oxide, crosslinked polyethylene oxides, polyethylene oxide copolymers, polyethylene glycol, polyethylene glycol copolymers (such as polypropylene-polyethylene glycol block copolymers) or polyethylene glycol-polyolefin copolymers; quaternary ammonium-based resins such as quaternary ammonium base-containing methacrylate copolymers, quaternary ammonium base-containing maleimide copolymers or quaternary ammonium base-containing methacrylic copolymers; sulfonic acid-based resins such as sodium polystyrene sulfonate; ionomers containing monovalent ions such as potassium; polyethers containing Li ions such as Li ion-containing polyether-polyolefin copolymers; polyether ester amide-based resins; ethylene oxide-epichlorhydrin-based resins and polyether ester-based resins.
Among the aforementioned antistatic resins, nonionic polyethers and polyethers containing Li ions are preferable, and among these, polyethylene glycol-polyolefin copolymers and Li ion-containing polyether-polyolefin copolymers are particularly preferable.

The two segments having solubility parameter values used as the basis for calculating the aforementioned maximum value (to be referred to as "specific segments") are preferably contained at 15 parts by weight to 60 parts by weight, and more preferably at 20 parts by weight to 50 parts by weight, based on 100 parts by weight of the polymer blend. In the case of being contained at less than 15 parts by weight, sealability and antistatic properties cannot be realized simultaneously, while in the case of being contained at greater than 60 parts by weight, sealability or antistatic properties decrease, thereby making this undesirable.

The weight ratio of one of the specific segments to the other specific segment is preferably within the range of 30:70 to 70:30. In the case the weight ratio of one of the specific segments to the other specific segment is less than 30 or greater than 70, sealability or antistatic properties decrease, thereby making this undesirable.

Although there are no particular limitations thereon, the thickness of the cover tape 200 is preferably 500 µm or less, more preferably 200 µm or less and even more preferably 100 µm or less. In addition, the thickness of the cover tape 200 is preferably 10 µm or more, more preferably 20 µm or more and even more preferably 30 µm or more.

Examples of methods used to form the adhesive layer 230 on the base material film or intermediate layer 220 include dry lamination and extrusion lamination. Furthermore, extrusion lamination is preferable in consideration of the flexibility of the base material layer 210.

### <Carrier Tape (Packaging Container)>

As shown in FIGS. 1 and 2, the carrier tape 300 has pockets 310 and sprocket holes 320 formed therein.

There are no particular limitations on the material of the carrier tape 300, and examples thereof include various types of resins such as polystyrene-based resins, polyethylene-based resins, polypropylene-based resins, polyester-based resins (such as polyethylene terephthalate resin), and polycarbonate-based resins.

Furthermore, in the present embodiment, although the absolute value of the difference between the "solubility parameter value of the main component of the carrier tape 300" and the "solubility parameter value of the adhesive resin of the cover tape 200" is preferably as small as possible, it is at least 1.90 or less and preferably 1.85 or less. Furthermore, a main component as referred to here refers to that accounting for 50% by weight or more of the material that composes the carrier tape 300.

An electrically conductive filler such as carbon black, graphite or carbon fiber is preferably dispersed in the material of the carrier tape 300. This electrically conductive filler imparts electrical conductivity to the carrier tape 300 and inhibits the carrier tape 300 from becoming electrically charged. Consequently, an electronic component 400 packaged with the packaging body 100 is not damaged easily by static electricity of the carrier tape 300.

As shown in FIG. 1, a plurality of the pockets 310 is formed at equal intervals along the lengthwise direction of the carrier tape 300 at those portions that house the electronic component 400. These pockets 310 are formed by, for example, hot press molding, hot vacuum molding or hot pressure molding of a material sheet of the carrier tape 300.

As shown in FIG. 1, the sprocket holes 320 are a plurality of holes formed at equal intervals along the lengthwise direction of the carrier tape 300. These sprocket holes 320 are formed at locations that are not covered by the cover tape 200 when the cover tape 200 is adhered to the carrier tape 300. The sprocket holes 320 engage with teeth of a sprocket wheel (not shown). The carrier tape 300 is transported when the sprocket wheel rotates while the sprocket wheel is engaged with the sprocket holes 320.

### <Adhesion of Cover Tape and Carrier Tape>

The cover tape 200 is heat-sealed to the carrier tape 300. This heat sealing is carried out using, for example, a sealer. Heat sealing is normally carried out over a standard width of 0.3 mm to 1.0 mm along the lengthwise direction of the cover tape 200 so as to pass over both edges of the pockets 310 in the direction of width.

### <Peeling of Cover Tape>

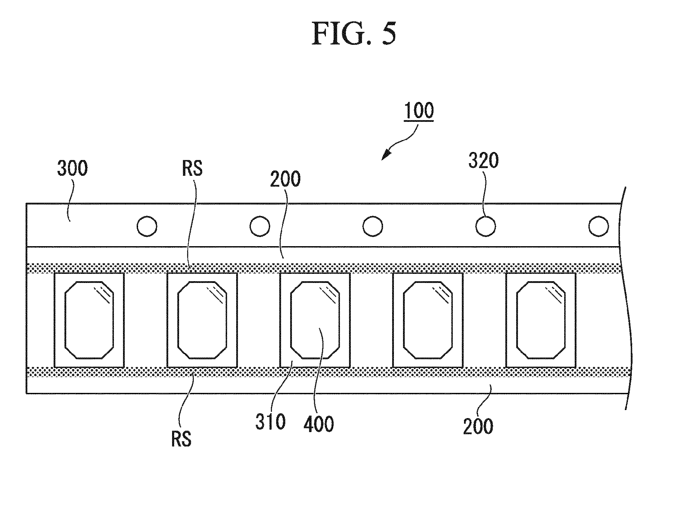

As shown in FIGS. 4 and 5, when the cover tape 200 according to the present embodiment is peeled from the carrier tape 300, the adhesive layer 230 undergoes cohesive failure. As a result, a state results in which a portion of the adhesive layer 230 on the cover tape side is peeled off (see reference symbol RC in FIG. 4), while the remainder RS of the adhesive layer 230 on the carrier tape side remains on the carrier tape 300.
The peel strength of the film (in compliance with the standards when using a carrier tape having a width of 8 mm as described in JIS C-0806-3) with respect to the carrier tape (packaging container) is preferably 0.1 N to 1.0 N and more preferably 0.2 N to 0.7 N.
In the case the peel strength is less than 0.1 N, spontaneous peeling occurs easily, while in the case the peel strength exceeds 1.0 N, there is increased susceptibility to the occurrence of problems such as an electronic component jumping out of the carrier tape due to vibration of the carrier tape, thereby making this undesirable.

### <Characteristics of Cover Tape According to Present Embodiment>

(1) The cover tape 200 according to the present embodiment undergoes cohesive failure when peeled from the carrier tape 300. Consequently, this film is resistant to the effects of the surface condition of an adherend, and in cases in which it is peeled from an adherend after being adhered thereto, fluctuations in peel strength can be reduced.

(2) In the present embodiment, the absolute value of the difference between the "solubility parameter value of the main component of the carrier tape 300" and the "solubility parameter value of the adhesive resin of the cover tape 200" is 1.90 or less. In general, two materials are more favorably adhered the closer their solubility parameter values. Thus, the carrier tape 300 and the cover tape 200 according to the present embodiment are favorably adhered.

### <Variations>

(A) Although the cover tape 200 according to the previous embodiment was heat-sealed to the carrier tape 300 through the adhesive layer 230, the cover tape 200 may also be adhered to the carrier tape 300 through an adhesive. Furthermore, in such case, a thermal adhesive resin may not be contained in the adhesive layer. However, even in such a case, the adhesive layer is required to undergo cohesive failure.

(B) Although the intermediate layer 220 was provided in the cover tape 200 according to the previous embodiment, the intermediate layer 220 may also be omitted as was previously described.

(C) Although not specifically mentioned in the previous embodiment, an antistatic layer may also be separately provided in the cover tape 200. Furthermore, the antistatic layer is preferably provided between the base material layer 210 and the intermediate layer 220 (in the case of a three-layer configuration) or between the base material layer 210 and the adhesive layer 230 (in the case of a two-layer configuration). Furthermore, examples of the antistatic layer include urethane isocyanate in which alkyl quaternary ammonium ethosulfate and propylene carbonate are dispersed.

(D) Although the adhesive resin in the adhesive layer 230 of the cover tape 200 according to the previous embodiment was a single segment polymer, the adhesive resin may also be a multi-segment polymer, or in other words, a block copolymer or graft copolymer. In such case, the absolute value of the difference between the "solubility parameter value of the segment that imparts adhesion" and the "solubility parameter value of the main component of the carrier tape 300" is preferably 1.90 or less.

The following provides more detailed explanations of the cover tape and packaging body according to the present invention by indicating examples and comparative examples. Furthermore, these examples and comparative examples do not limit the present invention.

### Example 1

### 1. Preparation of Polymer Blend

An ethylene-methyl acrylate random copolymer (to be referred to as an "EMA segment") (trade name: Elvaloy AC 1820, Du Pont-Mitsui Polychemicals Co., Ltd.) was prepared for use as an adhesive resin, a methyl methacrylate-styrene random copolymer (to be referred to as an "MS segment") (trade name: Atorete MM70, Nippon A & L, Inc.) was prepared for use as an incompatible resin, and a polypropylene-polyethylene glycol block copolymer (to be referred to as a "PP-PEG resin") (trade name: Pelestat 212, Sanyo Chemical Industries, Ltd.) was prepared for use as an antistatic resin.

Furthermore, the PP-PEG resin comprises a polypropylene segment (to be referred to as a "PP segment") and a polyethylene glycol segment (to be referred to as a "PEG segment"). The copolymerization ratio of the PP-PEG resin (weight ratio) was such that the ratio of the PP segment to the PEG segment was 50:50.

60 parts by weight of the EMA segment, 10 parts by weight of the MS segment and 30 parts by weight of the PP-PEG segment were mixed, and the mixture thereof was melted and blended using a twin-screw extruder under conditions of a cylinder temperature of 180°C to prepare pellets. Furthermore, in the case of considering the mixing ratio in segment units, the mixed weight ratio of the EMA segment, MS segment, PP segment and PEG segment was 60:10:15:15.

### (1) Details of each Segment

The following describes details of each segment.

### a) EMA Segment

Copolymerization ratio (weight ratio): ethylene:methyl acrylate = 80:20
Solubility parameter value: 8.34-8.51

### b) MS Segment

Copolymerization ratio (weight ratio): Methyl methacrylate:styrene = 70:30
Solubility parameter value: 8.95-9.38

### c) PP Segment

Solubility parameter value: 8.10

### d) PEG Segment

Solubility parameter value: 8.63

### (2) Absolute Values of Difference in Solubility Parameter

### Values between each Segment

The absolute values of the difference in solubility parameter values among all segments in the aforementioned polymer blend were as indicated below.
EMA segment - MS segment: 0.44 (min.), 1.04 (max.)
EMA segment - PP segment: 0.24 (min.), 0.41 (max.)
EMA segment - PEG segment: 0.12 (min.), 0.29 (max.)
MS segment - PP segment: 0.85 (min.), 1.28 (max.)
MS segment - PEG segment: 0.32 (min.), 0.75 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.85 and a maximum value of 1.28 as indicated above. Furthermore, those segments having solubility parameter values used as the basis for calculating the maximum value were the MS segment and PP segment. The MS segment and PP segment are contained in the polymer blend at 25 parts by weight based on 100 parts by weight of the polymer blend.

### 2. Production of Cover Tape

A hot melt of the aforementioned pellets was extruded onto a polyethylene terephthalate biaxially oriented film (Toyo Boseki Co., Ltd.) by extrusion lamination to produce a cover tape having a two-layer structure.

### 3. Peel Test

### (1) Carrier Tape

A carrier tape (A) comprising a mixture of 80 parts by weight of impact-resistant polystyrene (trade name: HT516, A & M Styrene Co., Ltd.), 5 parts by weight of ethylene-vinyl alcohol copolymer (trade name: Evaflex P2505, Du Pont-Mitsui Polychemicals Co., Ltd.) and 15 parts by weight of carbon black (trade name: Denka Black Particles, Denki Kagaku Kogyo Kabushiki Kaisha) (to be referred to as "PS carrier tape"), and a carrier tape (B) comprising a mixture of 67 parts by weight of polycarbonate, 22 parts by weight of PCTG (trade name: SKYGREEN J2003, SK Chemicals Co., Ltd.) and 11 parts by weight of carbon black (trade name: Ketjen Black EC, Ketjen Black International Co.) (to be referred to as "PC carrier tape") were prepared for use as carrier tape.

Furthermore, the main component of the PS carrier tape is impact-resistant polystyrene, and the solubility parameter value thereof is 8.60 to 9.10. In addition, the main component of the PC carrier tape is polycarbonate, and the solubility parameter value thereof is 9.80 to 10.00.

Thus, the absolute values of the difference between the "solubility parameter value of the main component of PS carrier tape" and the "solubility parameter value of the EMA segment serving as the adhesive resin of the cover tape" were all 1.90 or less based on a minimum value of 0.09 and a maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### (2) Adhesion of Cover Tape to Carrier Tape

The aforementioned cover tape was heat-sealed to the PS carrier tape and PC carrier tape, respectively. Furthermore, heat sealing was carried out using a sealer (trade name: MBM-4000, Ismeca) under conditions of a sealing temperature of 180°C, sealing time of 0.3 seconds and sealing pressure of 9.8 N.

### (3) Peel Test

Peel strength was taken to be the average load value when the cover tape was peeled from the PC carrier tape at a peeling angle of 165° to 180° in compliance with standards when using a carrier tape having a width of 8 mm as described in JIS C-0806-3. Furthermore, the peel strength of the cover tape with respect to the PC carrier tape according to the present example was 0.55 N (see Table 1).
In addition, the adhesive layer underwent cohesive failure when the cover tape according to the present example was peeled from the PC carrier tape and PS carrier tape (see Table 1).

### Example 2

A cover tape was prepared and a peel test was carried out in the same manner as Example 1 with the exception of using 65 parts by weight of the EMA segment, 5 parts by weight of the MS segment and 30 parts by weight of the PP-PEG resin. Furthermore, the MS segment and PP segment were contained at 20 parts by weight in the polymer blend based on 100 parts by weight of the polymer blend.

### (4) Results of Peel Test

The peel strength of the cover tape with respect to the PC carrier tape according to the present example was 0.53 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 3

A cover tape was prepared and a peel test was carried out in the same manner as Example 1 with the exception of using a methyl methacrylate-styrene random copolymer (to be referred to as an "MS segment") (trade name: Estyrene MS600NT, Nippon Steel Chemical Co., Ltd.) instead of the methyl methacrylate-styrene random copolymer used in Example 1 (trade name: Atorete MM70, Nippon A & L, Inc.). Furthermore, the copolymerization ratio and solubility parameter value of the MS segment according to the present example were as indicated below.

### (1) Details of MS Segment

Copolymerization ratio (weight ratio): Methyl methacrylate:styrene = 60:40 Solubility parameter value: 8.90-9.34

### (2) Absolute Values of Difference in Solubility Parameter

### Values between each Segment

The absolute values of the difference in solubility parameter values among all segments in the aforementioned polymer blend were as indicated below.
EMA segment - MS segment: 0.39 (min.), 1.00 (max.)
EMA segment - PP segment: 0.24 (min.), 0.41 (max.)
EMA segment - PEG segment: 0.12 (min.), 0.29 (max.)
MS segment - PP segment: 0.80 (min.), 1.24 (max.)
MS segment - PEG segment: 0.27 (min.), 0.71 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.80 and a maximum value of 1.24 as indicated above. Furthermore, those segments having solubility parameter values used as the basis for calculating the maximum value were the MS segment and PP segment. The MS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.28 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 4

A cover tape was prepared and a peel test was carried out in the same manner as Example 1 with the exception of using a methyl methacrylate-styrene random copolymer (to be referred to as an "MS segment") (trade name: Estyrene MS300, Nippon Steel Chemical Co., Ltd.) instead of the methyl methacrylate-styrene random copolymer used in Example 1 (trade name: Atorete MM70, Nippon A & L, Inc.). Furthermore, the copolymerization ratio and solubility parameter value of the MS segment according to the present example were as indicated below.

### (1) Details of MS Segment

Copolymerization ratio (weight ratio): Methyl methacrylate:styrene = 30:70 Solubility parameter value: 8.75-9.22

### (2) Absolute Values of Difference in Solubility Parameter

### Values between each Segment

The absolute values of the difference in solubility parameter values among all segments in the aforementioned polymer blend were as indicated below.
EMA segment - MS segment: 0.24 (min.), 0.88 (max.)
EMA segment - PP segment: 0.24 (min.), 0.41 (max.)
EMA segment - PEG segment: 0.12 (min.), 0.29 (max.)
MS segment - PP segment: 0.65 (min.), 1.12 (max.)
MS segment - PEG segment: 0.12 (min.), 0.59 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.65 and a maximum value of 1.12 as indicated above. Furthermore, those segments having the solubility parameter values used as the basis for calculating the maximum value were the MS segment and PP segment. The MS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.59 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 5

A cover tape was prepared in the same manner as Example 4 with the exception of using 45 parts by weight of the EMA segment, 25 parts by weight of the MS segment and 30 parts by weight of the PP-PEG resin, and a peel test was carried out in the same manner as Example 1. Furthermore, the MS segment and PP segment were contained at 40 parts by weight in the polymer blend based on 100 parts by weight of the polymer blend.

### (4) Results of Peel Test

The peel strength of the cover tape with respect to the PC carrier tape according to the present example was 0.28 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 6

A cover tape was prepared in the same manner as Example 4 with the exception of using 35 parts by weight of the EMA segment, 35 parts by weight of the MS segment and 30 parts by weight of the PP-PEG resin, and a peel test was carried out in the same manner as Example 1. Furthermore, the MS segment and PP segment were contained at 50 parts by weight in the polymer blend based on 100 parts by weight of the polymer blend.

### (4) Results of Peel Test

The peel strength of the cover tape with respect to the PC carrier tape according to the present example was 0.14 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 7

A cover tape was prepared and a peel test was carried out in the same manner as Example 1 with the exception of using a methyl methacrylate-styrene random copolymer (to be referred to as an "MS segment") (trade name: Estyrene MS200NT, Nippon Steel Chemical Co., Ltd.) instead of the methyl methacrylate-styrene random copolymer used in Example 1 (trade name: Atorete MM70, Nippon A & L, Inc.). Furthermore, the copolymerization ratio and solubility parameter value of the MS segment according to the present example were as indicated below.

### (1) Details of MS Segment

Copolymerization ratio (weight ratio): Methyl methacrylate:styrene = 20:80
Solubility parameter value: 8.70-9.18

### (2) Absolute Values of Difference in Solubility Parameter

### Values between each Segment

The absolute values of the difference in solubility parameter values among all segments in the aforementioned polymer blend were as indicated below.
EMA segment - MS segment: 0.19 (min.), 0.84 (max.)
EMA segment - PP segment: 0.24 (min.), 0.41 (max.)
EMA segment - PEG segment: 0.12 (min.), 0.29 (max.)
MS segment - PP segment: 0.60 (min.), 1.08 (max.)
MS segment - PEG segment: 0.07 (min.), 0.55 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.60 and a maximum value of 1.08 as indicated above. Furthermore, those segments having solubility parameter values used as the basis for calculating the maximum value were the MS segment and PP segment. The MS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.52 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 8

A cover tape was prepared in the same manner as Example 7 with the exception of using 35 parts by weight of the EMA segment, 35 parts by weight of the MS segment and 30 parts by weight of the PP-PEG resin, and a peel test was carried out in the same manner as Example 1. Furthermore, the MS segment and PP segment were contained at 50 parts by weight in the polymer blend based on 100 parts by weight of the polymer blend.

### (4) Results of Peel Test

The peel strength of the cover tape with respect to the PC carrier tape according to the present example was 0.34 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 9

A cover tape was prepared and a peel test was carried out in the same manner as Example 1 with the exception of using polystyrene (to be referred to as an "PS segment") (trade name: Toyo Styrol G210C, Toyo Styrene Co., Ltd.) instead of the methyl methacrylate-styrene random copolymer used in Example 1 (trade name: Atorete MM70, Nippon A & L, Inc.). Furthermore, the solubility parameter value of the PS segment according to the present example was as indicated below.

### (1) Details of PS Segment

### Solubility parameter value: 8.60-9.10

### (2) Absolute Values of Difference in Solubility Parameter

### Values between each Segment

The absolute values of the difference in solubility parameter values among all segments in the aforementioned polymer blend were as indicated below.
EMA segment - PS segment: 0.09 (min.), 0.76 (max.)
EMA segment - PP segment: 0.24 (min.), 0.41 (max.)
EMA segment - PEG segment: 0.12 (min.), 0.29 (max.)
PS segment - PP segment: 0.50 (min.), 1.00 (max.)
PS segment - PEG segment: 0.03 (min.), 0.47 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.50 and a maximum value of 1.00 as indicated above. Furthermore, those segments having solubility parameter values used as the basis for calculating the maximum value were the PS segment and PP segment. The PS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.57 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.09 and maximum value of 0.76.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.29 and maximum value of 1.66.

### Example 10

A cover tape was prepared and a peel test was carried out in the same manner as Example 1 with the exception of using an ethylene-methyl acrylate random copolymer (to be referred to as an "EMA segment") (trade name: Elvaloy AC 1913, Du Pont-Mitsui Polychemicals Co., Ltd.) instead of the ethylene-methyl acrylate random copolymer (trade name: Elvaloy AC 1820, Du Pont-Mitsui Polychemicals Co., Ltd.) used in Example 1. Furthermore, the copolymerization ratio and solubility parameter value of the EMA segment according to the present example were as indicated below.

### (1) Details of EMA Segment

Copolymerization ratio (weight ratio):
Ethylene:methyl acrylate = 87:13
Solubility parameter value: 8.19-8.37

### (2) Absolute Values of Difference in Solubility Parameter

### Values between each Segment

The absolute values of the difference in solubility parameter values among all segments in the aforementioned polymer blend were as indicated below.
EMA segment - MS segment: 0.58 (min.), 1.19 (max.)
EMA segment - PP segment: 0.09 (min.), 0.27 (max.)
EMA segment - PEG segment: 0.26 (min.), 0.44 (max.)
MS segment - PP segment: 0.85 (min.), 1.28 (max.)
MS segment - PEG segment: 0.32 (min.), 0.75 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.85 and a maximum value of 1.28 as indicated above. Furthermore, those segments having solubility parameter values used as the basis for calculating the maximum value were the MS segment and PP segment. The MS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.26 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.23 and maximum value of 0.91.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.43 and maximum value of 1.81.

### Example 11

A cover tape was prepared and a peel test was carried out in the same manner as Example 1 with the exception of using an ethylene-methyl methacrylate random copolymer (to be referred to as an "EMMA segment") (trade name: Acryft WH303F, Sumitomo Chemical Co., Ltd.) instead of the ethylene-methyl acrylate random copolymer (trade name: Elvaloy AC 1820, Du Pont-Mitsui Polychemicals Co., Ltd.) used in Example 1. Furthermore, the copolymerization ratio and solubility parameter value of the EMMA segment according to the present example were as indicated below.

### (1) Details of EMMA Segment

Copolymerization ratio (weight ratio): Ethylene:methyl methacrylate = 82:18
Solubility parameter value: 8.12-8.35

### (2) Absolute Values of Difference in Solubility Parameter

### Values between each Segment

The absolute values of the difference in solubility parameter values among all segments in the aforementioned polymer blend were as indicated below.
EMMA segment - MS segment: 0.60 (min.), 1.26 (max.)
EMMA segment - PP segment: 0.02 (min.), 0.25 (max.)
EMMA segment - PEG segment: 0.28 (min.), 0.51 (max.)
MS segment - PP segment: 0.85 (min.), 1.28 (max.)
MS segment - PEG segment: 0.32 (min.), 0.75 (max.)
PP segment - PEG segment: 0.53 (min.)

### (3) Maximum Value of Absolute Values of Difference in

### Solubility Parameter Values among Segments

The maximum value of the absolute values of the difference in solubility parameter values among the segments was within the range of 0.40 to 1.40 based on a minimum value of 0.85 and a maximum value of 1.28 as indicated above. Furthermore, those segments having solubility parameter values used as the basis for calculating the maximum value were the MS segment and PP segment. The MS segment and PP segment are contained in the polymer blend at 25 parts by weight based on 100 parts by weight of the polymer blend.

### (4) Results of Peel Test

The peel strength of the cover tape with respect to the PC carrier tape according to the present example was 0.21 N. In addition, the adhesive layer of the cover tape according to the present example underwent cohesive failure when peeled from the PC carrier tape and PS carrier tape (see Table 1).

Furthermore, the absolute values of the difference between the "solubility parameter value of the main component of the PS carrier tape" and the "solubility parameter value of the EMA segment serving as the adhesive resin of the cover tape" were all 1.90 or less based on a minimum value of 0.25 and maximum value of 0.98.

In addition, the absolute values of the difference between the "solubility parameter value of the main component of the PC carrier tape" and the "solubility parameter value of the EMA segment serving as the adhesive resin of the cover tape" were all 1.90 or less based on a minimum value of 1.45 and maximum value of 1.88.

**[Table 1]**

| | Adhesive Resin | | | Incompatible Resin | | | Antistatic Resin | | | Max. diff. | Peeling mode | Peel strength (N) |
|---|---|---|---|---|---|---|---|---|---|---|---|---|
| | SG | SP value | Blending ratio | SG | SP value | Blending ratio | SG | SP value | Blending ratio | | | |
| Ex.1 | EMA | 8.34-8.51 | 60 | MS | 8.95-9.38 | 10 | PP | 8.10 | 15 | Max.1.28 | Cohesive failure | 0.55 |
| | | | | | | | PEG | 8.63 | 15 | Min.0.85 | | |
| Ex.2 | EMA | 8.34-8.51 | 65 | MS | 8.95-9.38 | 5 | PP | 8.10 | 15 | Max.1.28 | Cohesive failure | 0.53 |
| | | | | | | | PEG | 8.63 | 15 | Min.0.85 | | |
| Ex.3 | EMA | 8.34-8.51 | 60 | MS | 8.90-9.34 | 10 | PP | 8.10 | 15 | Max.1.24 | Cohesive failure | 0.28 |
| | | | | | | | PEG | 8.63 | 15 | Min.0.80 | | |
| Ex.4 | EMA | 8.34-8.51 | 60 | MS | 8.75-9.22 | 10 | PP | 8.10 | 15 | Max.1.12 | Cohesive failure | 0.59 |
| | | | | | | | PEG | 8.63 | 15 | Min.0.65 | | |
| Ex.5 | EMA | 8.34-8.51 | 45 | MS | 8.75-9.22 | 25 | PP | 8.10 | 15 | Max.1.12 | Cohesive failure | 0.28 |
| | | | | | | | PEG | 8.63 | 15 | Min.0.65 | | |
| Ex.6 | EMA | 8.34-8.51 | 35 | MS | 8.75-9.22 | 35 | PP | 8.10 | 15 | Max.1.12 | Cohesive failure | 0.14 |
| | | | | | | | PEG | 8.63 | 15 | Min.0.65 | | |
| Ex.7 | EMA | 8.34-8.51 | 60 | MS | 8.70-9.18 | 10 | PP | 8.10 | 15 | Max.1.08 | Cohesive failure | 0.52 |
| | | | | | | | PEG | 8.63 | 15 | Min.0.60 | | |
| Ex.8 | EMA | 8.34-8.51 | 35 | MS | 8.70-9.18 | 35 | PP | 8.10 | 15 | Max.1.08 | Cohesive failure | 0.34 |
| | | | | | | | PEG | 8.63 | 15 | Min.0.60 | | |
| Ex.9 | EMA | 8.34-8.51 | 60 | PS | 8.60-9.10 | 10 | PP | 8.10 | 15 | Max.1.00 | Cohesive failure | 0.57 |
| | | | | | | | PEG | 8.63 | 15 | Min.0.50 | | |
| Ex.10 | EMA | 8.19-8.37 | 60 | MS | 8.98-9.40 | 10 | PP | 8.10 | 15 | Max.1.28 | Cohesive failure | 0.26 |
| | | | | | | | PEG | 8.63 | 15 | Min.0.85 | | |
| Ex.11 | EMMA | 8.12-8.35 | 60 | MS | 8.95-9.38 | 10 | PP | 8.10 | 15 | Max.1.28 | Cohesive failure | 0.21 |
| | | | | | | | PEG | 8.63 | 15 | Min.0.85 | | |

### (Comparative Example 1)

### 1. Production of Cover Tape

A hot melt of an ethylene-methyl acrylate random copolymer (trade name: Elvaloy AC 1820, Du Pont-Mitsui Polychemicals Co., Ltd.) was extruded onto a polyethylene terephthalate biaxially oriented film (Toyo Boseki Co., Ltd.) by extrusion lamination to produce a cover tape.

### 2. Peel Test

### A peel test was carried out in the same manner as the peel test of Example 1.

The adhesive layer of the cover tape according to the present comparative example underwent interfacial peeling when peeled from a carrier tape (see Table 2).

### (Comparative Example 2)

A cover tape was prepared and a peel test was carried out in the same manner as Comparative Example 1 with the exception of using an ethylene-methyl acrylate random copolymer (trade name: Elvaloy AC 1913, Du Pont-Mitsui Polychemicals Co., Ltd.) instead of the ethylene-methyl acrylate random copolymer (trade name: Elvaloy AC 1820, Du Pont-Mitsui Polychemicals Co., Ltd.) used in Comparative Example 1.

The adhesive layer of the cover tape according to the present comparative example underwent interfacial peeling when peeled from a carrier tape (see Table 2).

### [Comparative Example 3]

A cover tape was prepared and a peel test was carried out in the same manner as Comparative Example 1 with the exception of using an ethylene-methyl methacrylate random copolymer (trade name: Acryft WH303F, Sumitomo Chemical Co., Ltd.) instead of the ethylene-methyl acrylate random copolymer (trade name: Elvaloy AC 1820, Du Pont-Mitsui Polychemicals Co., Ltd.) used in Comparative Example 1.

The adhesive layer of the cover tape according to the present comparative example underwent interfacial peeling when peeled from a carrier tape (see Table 2).

### [Comparative Example 4]

A cover tape was prepared and a peel test was carried out in the same manner as Comparative Example 1 with the exception of using an ethylene-methyl methacrylate random copolymer (trade name: Acryft WK402, Sumitomo Chemical Co., Ltd.) instead of the ethylene-methyl acrylate random copolymer (trade name: Elvaloy AC 1820, Du Pont-Mitsui Polychemicals Co., Ltd.) used in Comparative Example 1.

The adhesive layer of the cover tape according to the present comparative example underwent interfacial peeling when peeled from a carrier tape (see Table 2).

### [Comparative Example 5]

### 1. Preparation of Polymer Blend

An ethylene-methyl methacrylate random copolymer (to be referred to as an "EMMA segment") (trade name: Acryft WK402, Sumitomo Chemical Co., Ltd.) was prepared for use as an adhesive resin, and polypropylene (to be referred to as a "PP segment") (trade name: J106, Grand Polymer Co.) was prepared for use as an incompatible resin.

70 parts by weight of the EMMA segment and 30 parts by weight of the PP segment were mixed, and the mixture thereof was melted and blended using a twin-screw extruder under conditions of a cylinder temperature of 180°C to prepare pellets.

### (1) Details of each Segment

The following describes details of each segment.

### a) EMMA Segment

Copolymerization ratio (weight ratio): ethylene:methyl methacrylate = 75:25
Solubility parameter value: 8.20-8.45

### b) PP Segment

Solubility parameter value: 8.10

### (2) Absolute Value of Difference in Solubility Parameter

### Values between each Segment

The absolute value of the difference in solubility parameter values between segments in the aforementioned polymer blend was as indicated below.
EMMA segment - PP segment: 0.10 (min.), 0.35 (max.)

### (3) Maximum Value of Absolute Value of Difference in

### Solubility Parameter Values between Segments

The maximum value of the absolute value of the difference in solubility parameter values between the segments was outside the range of 0.40 to 1.40 based on a minimum value of 0.10 and a maximum value of 0.35 as indicated above.

### 2. Production of Cover Tape

A hot melt of the aforementioned pellets was extruded onto a polyethylene terephthalate biaxially oriented film (Toyo Boseki Co., Ltd.) by extrusion lamination to produce a cover tape having a two-layer structure.

### 3. Peel Test

### A peel test was carried out in the same manner as the peel test of Example 1.

The adhesive layer of the cover tape according to the present comparative example underwent interfacial peeling when peeled from a carrier tape (see Table 2).

**[Table 2]**

| | Adhesive Resin | | | Incompatible Resin | | | Max. Difference | Peeling Mode |
|---|---|---|---|---|---|---|---|---|
| | SG | SP value | Blending ratio | SG | SP value | Blending ratio | | |
| Comp.Ex.1 | EMA | 8.34-8.51 | 100 | -- | -- | -- | -- | Interfacial peeling |
| Comp.Ex.2 | EMA | 8.19-8.37 | 100 | -- | -- | -- | -- | Interfacial peeling |
| Comp.Ex.3 | EMMA | 8.12-8.35 | 100 | -- | -- | -- | -- | Interfacial peeling |
| Comp.Ex.4 | EMMA | 8.20-8.45 | 100 | -- | -- | -- | -- | Interfacial peeling |
| Comp.Ex.5 | EMMA | 8.20-8.45 | 70 | PP | 8.10 | 30 | Max. 0.35 | Interfacial peeling |
| | | | | | | | Min. 0.10 | |

### INDUSTRIAL APPLICABILITY

The film according to the present invention is characterized by being resistant to the effects of the surface condition of an adherend and demonstrating only small fluctuations in peel strength in the case of being peeled from the adherend, and is useful, for example, as a cover tape or a covering material for a food package.

### BRIEF DESCRIPTION OF THE REFERENCE SYMBOLS

100 Packaging body
200 Cover tape
230 Adhesive layer (surface layer, thermal adhesive layer)
300 Carrier tape

## Claims

1. A film provided with a surface layer having as a main component thereof a polymer blend comprising at least two types of single segment polymers, at least two types of multi-segment polymers, or at least one type of single segment polymer and at least one type of multi-segment polymer,
wherein a maximum value of an absolute value of a difference in solubility parameter values among all segments in the polymer blend is 0.40 to 1.40.

2. The film according to claim 1, wherein two specific segments having solubility parameter values serving as a basis for calculating the maximum value are contained at 15 parts by weight to 60 parts by weight based on 100 parts by weight of the polymer blend, and a weight ratio of one specific segment to the other specific segment is within a range of 30:70 to 70:30.

3. The film according to claim 1 or 2, wherein at least one type of the segments has thermal adhesiveness, and the surface layer functions as a thermal adhesive layer.

4. A packaging body provided with the film according to claim 3 and a packaging container, an opening of which is covered by the film,
wherein the absolute value of the difference between the solubility parameter value of the segment having thermal adhesiveness and the solubility parameter value of the main component of a resin composition that forms a surface around the opening of the packaging container is 1.90 or less.

5. The packaging body according to claim 4, wherein peel strength of the film with respect to the packaging container (as measured in compliance with standards when using a carrier tape having a width of 8 mm as described in JIS C-0806-3) is 0.1 N to 1.0 N.
